# EUROPÄISCHE PATENTSCHRIFT

(11) **EP 3 095 173 B1**
(45) Veröffentlichungstag und Bekanntmachung des Hinweises auf die Patenterteilung: **28.02.2018**
(21) Anmeldenummer: 15712083.3
(22) Anmeldetag: 11.03.2015
(51) Int. Cl.: H02J 13/00

(54) **VERFAHREN ZUM ÜBERTRAGEN VON NACHRICHTEN IN EINEM ENERGIEAUTOMATISIERUNGS-NETZWERK, ENERGIEAUTOMATISIERUNGSKOMPONENTE UND UMSPANNSTATION**
METHOD FOR TRANSMITTING MESSAGES IN AN ENERGY AUTOMATION NETWORK, ENERGY AUTOMATION COMPONENT AND SUBSTATION
PROCÉDÉ DE TRANSMISSION DE MESSAGES DANS UN RÉSEAU D'AUTOMATISATION D'ÉNERGIE, COMPOSANTS D'AUTOMATISATION D'ÉNERGIE ET STATION DE TRANSFORMATION

(30) Priorität: 10.04.2014 DE 102014206946
(43) Veröffentlichungstag der Anmeldung: 23.11.2016
(73) Patentinhaber: Siemens Aktiengesellschaft, 80333 München (DE)
(72) Erfinder: EGER, Kolja, 30900 Wedemark (DE); FRANK, Reinhard, 81369 München (DE)
(86) Internationale Anmeldenummer: PCT/EP2015/055079
(87) Internationale Veröffentlichungsnummer: WO 2015/154933

(56) Entgegenhaltungen:
- WO-A1-2014/032688
- WARD S ET AL: "Inside the Cloud - Network Communications Basics for the Relay Engineer", PROTECTIVE RELAY ENGINEERS, 2008 61ST ANNUAL CONFERENCE FOR, IEEE, PISCATAWAY, NJ, USA, 1. April 2008 (2008-04-01), Seiten 273-303, XP031249258, ISBN: 978-1-4244-1949-4
- SKENDZIC V ET AL: "Enhancing Power System Automation Through the Use of Real-Time Ethernet", POWER SYSTEMS CONFERENCE: ADVANCED METERING, PROTECTION, CONTROL, COMM UNICATION, AND DISTRIBUTED RESOURCES, 2006. PS '06, IEEE, PI, 1. März 2006 (2006-03-01), Seiten 480-495, XP031102636, ISBN: 978-0-615-13280-8

## Beschreibung

Die Erfindung betrifft ein Verfahren zum Übertragen von Nachrichten gemäß dem Standard IEC 61850 (GOOSE) in einem Energieautomatisierungs-Netzwerk, das eine Anzahl an Umspannstationen umfasst. Die Erfindung betrifft ferner Energieautomatisierungskomponenten sowie Umspannstationen für Energieautomatisierungs-Netzwerke.

GOOSE (Generic Object Oriented Substation Events) ist ein echtzeitfähiges Netzwerkprotokoll zur Steuerung von Geräten über Ethernet-Netzwerke. Es ist in dem Standard IEC 61850 spezifiziert. GOOSE sendet Nachrichten über den Zustand von einem Gerät regelmäßig in einem festen Intervall, zum Beispiel jede Sekunde. GOOSE-Nachrichten werden per Multicast gesendet, d.h. es können gleichzeitig mehrere Empfänger über den Zustand von einem Sender informiert werden.

Ein typischer Anwendungsfall von GOOSE ist die spontane Übertragung von Zustandsänderungen von Energieautomatisierungskomponenten, wie zum Beispiel Schalterstellung (Ein/Aus) von Schaltgeräten, oder anderen Zustandsmeldungen der Energieautomatisierungskomponente an weitere Energieautomatisierungskomponenten. Die Energieautomatisierungskomponenten sind zum Austausch der GOOSE-Nachrichten über Ethernet miteinander verbunden. Der Vorteil der Steuerung der Energieautomatisierungskomponenten über Ethernet gegenüber einer herkömmlichen, direkten Gerät-zu-Gerät-Verschaltung liegt in der freien Konfiguration der an das Netzwerk angeschlossenen Geräte. Für neue Sende- und Empfangsbeziehungen müssen keine neuen Kabel verlegt werden. Auch die Verbreitung von Ethernet und die Möglichkeit der Nutzung von Ethernet für weitere Dienste sind Gründe für eine Anwendung dieser Technik.

GOOSE-Nachrichten werden demgemäß auf Schicht 2 (Layer 2) des OSI-Referenzmodells übertragen. Dabei setzt eine GOOSE-Nachricht in einem Ethernet-Datenpaket das Ethertyp-Feld, wodurch eine Priorisierung der GOOSE-Nachricht gegenüber anderen Ethernet-Nachrichten möglich ist. Durch die Priorisierung werden GOOSE-Nachrichten gegenüber IP-Paketen in dem Netzwerk bevorzugt behandelt, sodass die Verzögerung innerhalb des Netzwerks möglichst gering ist und der Empfänger GOOSE-Nachrichten unter Einhaltung eines Zeitfensters erhält. Diese Protokoll-Struktur ermöglicht die Echtzeitfähigkeit von GOOSE.

Energieautomatisierungs-Netzwerke weisen eine Mehrzahl an Umspannstationen auf, wobei jede der Umspannstationen zumindest eine wie oben beschriebene Automatisierungskomponente und ein in der Regel Ethernet-basiertes Kommunikationsnetzwerk umfasst, über das die Energieautomatisierungskomponenten Nachrichten gemäß GOOSE austauschen können. Zur Steuerung des Energieautomatisierungs-Netzwerks ist es teils erforderlich, dass der Zustand einer Energieautomatisierungskomponente einer Umspannstation auch an Energieautomatisierungskomponenten in anderen Umspannstationen übermittelt wird. GOOSE in der ursprünglichen Ausprägung kann hierfür in der Regel nicht verwendet werden, da ein die Kommunikationsnetzwerke (Ethernet) der Umspannstationen verbindendes öffentliches Netzwerk in der Regel keine Multicast-Unterstützung aufweist oder diese lediglich gegen verhältnismäßig hohe Kosten anbietet. Das typischerweise auf dem Internet-Protokoll basierende öffentliche Netzwerk ist in Regel ein WAN (Wide Area Network), bei dem die Datenübertragung auf Schicht 3 (Layer 3) des OSI-Referenzmodells unter Nutzung von Routing-Algorithmen erfolgt.

Um dennoch die Übermittlung von GOOSE-Nachrichten über die Netzwerkgrenzen einer Umspannstation hinweg in das Kommunikationsnetzwerk einer anderen Umspannstation übertragen zu können, kann die Infrastruktur von Zugangsknoten zu dem öffentlichen Netzwerk angepasst werden. Dadurch ist es möglich, dass auch das öffentliche Netzwerk Nachrichten auf Schicht 2 des OSI-Referenzmodells übertragen kann. Dies kann beispielsweise wie in der Spezifikation "IEC 61850 GOOSE over WiMax for fast isolation and restoration of faults in distribution networks" beschrieben, realisiert werden.

In IEC 61850-90-5 wird vorgeschlagen, GOOSE-Nachrichten über IP-multicast und UDP vorzunehmen. Dies ist auch als "Routable GOOSE" bekannt.

Eine weitere Alternative bestünde darin, Layer-2-Tunnel in den Zugangsknoten zu dem öffentlichen Netzwerk, das heißt den Routern des öffentlichen Netzwerks aufzubauen.

Ein Nachteil der oben vorgeschlagenen Lösungsmöglichkeiten besteht darin, dass zum einen modifizierte Hardware an den Zugangspunkten zu dem öffentlichen Netzwerk erforderlich ist. Zum anderen ist die Konfiguration der einzelnen Energieautomatisierungskomponenten umständlich.

Aus der WO 2014/032688 A1 ist ein Verfahren bekannt, beim dem Nachrichten gemäß dem Standard IEC 61850 über ein IPbasiertes Netz mittels eines Tunnelmechanismus übertragen werden. Der Tunnelmechanismus wird basierend auf einer zusätzlichen Protokollschicht realisiert.

Die Veröffentlichung "Inside the Cloud - Network Communications Basics for the Relay Engineer" von S. Ward, Protective Relay Engineers, 2008, 61st Annual Conference for, IEEE, Piscataway, JY, USA, 1. April 2008, S. 273-303 offenbart verschiedene Varianten einer Kommunikation zwischen IEC 61850-Substationen, wie z.B. die Nutzung von Tunnelmechanismen, die Verwendung von Gateways oder die Verwendung von Routern.

Die Veröffentlichung "Enhancing Power System Automation Through the Use of Real-Time Ethernet" von V. Skendzic et al., Power Systems Conference: Advanced Metering, Protection, Control, Communication, and Distributed Resources, 2006, IEEE, 1. März 2006, Seiten 480-495 offenbart verschiedene Möglichkeiten Nachrichten gemäß IEC 61850 über ein paketvermitteltes Netzwerk zu übertragen.

Es ist Aufgabe der vorliegenden Erfindung, ein Verfahren zum Übertragen von Nachrichten gemäß dem Standard IEC 61850 (GOOSE) in einem Energieautomatisierungs-Netzwerk anzugeben, welches auf einfachere Weise und insbesondere ohne Hardware-Modifikationen realisierbar ist. Eine weitere Aufgabe besteht darin, eine dazu geeignete Energieautomatisierungskomponente sowie eine entsprechend eingerichtete Umspannstation anzugeben.

Diese Aufgaben werden gelöst durch ein Verfahren gemäß den Merkmalen des Patentanspruches 1, eine Energieautomatisierungskomponente gemäß den Merkmalen des Patentanspruches 12 und eine Umspannstation gemäß den Merkmalen des Patentanspruches 13.

Gemäß einem ersten Aspekt wird ein Verfahren zum Übertragen von Nachrichten gemäß dem Standard IEC 61850 (GOOSE) in einem Energieautomatisierung-Netzwerk vorgeschlagen, das eine Anzahl an Umspannstationen umfasst. Jede der Umspannstationen umfasst zumindest eine Energieautomatisierungskomponente und ein Kommunikationsnetzwerk, über das die zumindest eine Energieautomatisierungskomponente Nachrichten gemäß einem ersten Kommunikationsprotokoll austauschen können. Das erste Kommunikationsprotokoll ist insbesondere das Ethernet. Allgemein kann das erste Kommunikationsprotokoll jedes auf Schicht 2 des OSI-Referenzmodells basierende Protokoll sein.

Die Kommunikationsnetzwerke der Umspannstationen sind über ein öffentliches, auf einem zweiten Kommunikationsprotokoll, insbesondere dem Internet Protokoll, basierendes Netzwerk ohne Multicast-Unterstützung zum Austausch von Nachrichten miteinander verbunden. Das öffentliche Netzwerk kann beispielsweise das Internet oder ein globales Firmen-, Industrie- oder Utility-Netzwerk sein.

Jede der Energieautomatisierungskomponenten umfasst zumindest eine Applikation zu deren Steuerung. Zwischen Applikationen, die zu einer Gruppe gehören und in Energieautomatisierungskomponenten zumindest zweier Umspannstationen angeordnet sind können Nachrichten gemäß dem Standard IEC 61850 (GOOSE) ausgetauscht werden.

Jede der Energieautomatisierungskomponenten umfasst ein Kommunikationsmittel, welches zur Verarbeitung von Nachrichten gemäß dem Standard IEC 61850 (GOOSE) ausgebildet ist. Das Kommunikationsmittel kann in Software oder Hardware realisiert sein. Es kann als virtueller Switch betrachtet werden.

Bei dem Verfahren wird durch eine erste Applikation einer sendenden Energieautomatisierungskomponente eine Nachricht gemäß dem Standard IEC 61850 ausgesendet. Die Nachricht wird durch das Kommunikationsmittel der sendenden Energieautomatisierungskomponente empfangen, verarbeitet und über das Kommunikationsnetzwerk der Umspannstation, in der die sendende Energieautomatisierungskomponente angeordnet ist, und/oder das öffentliche Netzwerk an zumindest eine zweite Applikation übertragen. Die Nachricht wird von dem oder den Kommunikationsmitteln der eine jeweilige zweite Applikation umfassenden empfangenden Energieautomatisierungskomponente empfangen, verarbeitet und an die zugeordnete zweite Applikation weitergeleitet.

Erfindungsgemäß gehört die erste Applikation zu einer bestimmten Gruppe von Applikationen und die zumindest eine zweite Applikation gehört zu der gleichen Gruppe von Applikationen.

Die Kommunikationsmittel einer jeweiligen Energieautomatisierungskomponente werden konfiguriert, indem für jede in der betreffenden Energieautomatisierungskomponente enthaltene Applikation als erste Applikation eine Information erzeugt wird, welche eine jeweilige Addressinformation der empfangenen Energieautomatisierungskomponenten für die gleiche Gruppe, zu der die betreffende zweite Applikation gehörig ist, umfasst. Mit anderen Worten erfolgt eine Konfiguration der Adressen von anderen Energieautomatisierungskomponenten, welche eine auszusendende GOOSE-Nachricht empfangen sollen.

Schließlich wird zum Übertragen der Nachricht von der sendenden Energieübertragungskomponente mittels der Adressinformationen der empfangenden Energieautomatisierungskomponenten ein Tunnel zu der oder den empfangenden Energieautomatisierungskomponenten über das öffentliche Netzwerk aufgebaut. Durch den oder die Tunnel wird das oben erwähnte "Overlay-Netzwerk" für die Übertragung von GOOSE-Nachrichten über ein öffentliches Netzwerk ohne Multicast-Unterstützung ermöglicht.

Durch das Verfahren ist es möglich, Nachrichten einer die Schicht 2 des OSI-Referenzmodells nutzenden Applikation, wie zum Beispiel GOOSE, über ein Layer-3-Unicast-Netzwerk zu übertragen, wodurch GOOSE-Nachrichten auch in verteilten IP-Netzwerken ohne Layer-3 Multicast-Unterstützung übertragen werden können. Insbesondere ist eine Ende-zu-Ende Schicht-2-Infrastruktur über ein öffentliches Netzwerk (d.h. ein WAN) nicht erforderlich.

Im Gegensatz zu einem Layer-2-VPN-Netzwerk, welches durch einen Zugangsknoten des öffentlichen Netzwerks bereitgestellt würde, realisiert das vorgeschlagene Verfahren ein spezifisches Applikationsnetzwerk, in dem Nachrichten gemäß dem ersten Kommunikationsprotokoll verteilt werden. Das spezifische Applikationsnetzwerk wird in dieser Beschreibung auch als "Overlay-Netzwerk" bezeichnet. GOOSE-Nachrichten können so an vordefinierte Empfänger übertragen werden, unabhängig davon, ob sich diese im gleichen Netzwerk wie der Sender oder in einem durch ein IP-Netz ohne Multicast-Unterstützung getrennten, anderen Netzwerk befinden.

Ein weiterer Vorteil besteht darin, dass die für die Übertragung erforderliche Konfiguration direkt auf bzw. in der Energieautomatisierungskomponente durchgeführt werden kann. Hierdurch ist es nicht erforderlich, Hardwareänderungen, insbesondere an Komponenten des öffentlichen Netzwerks, vorzunehmen. Im Ergebnis werden damit keine speziellen Anforderungen an das die Umspannstationen datentechnisch verbindende öffentliche Netzwerk gestellt.

Die erzeugte Information kann eine Weiterleitungstabelle sein. Die Information kann beispielsweise in dem Kommunikationsmittel gespeichert sein. Die Information kann auch in einem Speicher der Energieautomatisierungskomponente gespeichert sein. Es versteht sich, dass für jede Applikation einer Energieautomatisierungskomponente eine zugeordnete Information bzw. Weiterleitungstabelle konfiguriert und gespeichert wird.

Die Erzeugung der Information kann durch einen zentralen Rechner gleichzeitig für alle Energieautomatisierungskomponente vor der Inbetriebnahme des Energieautomatisierungs-Netzwerks erfolgen. Beispielsweise kann die Information von dem zentralen Rechner an sämtliche Energieautomatisierungskomponenten des Energieautomatisierungs-Netzwerks übertragen werden.

Alternativ kann die Erzeugung der Information, insbesondere im laufenden Betrieb des Energieautomatisierungs-Netzwerks, in Reaktion auf den Erhalt einer Anfrage-Nachricht von einer der Energieautomatisierungskomponenten erfolgen. Hierzu kann beispielsweise beim Empfangen einer GOOSE-Nachricht durch das Kommunikationsmittel einer Energieautomatisierungskomponente, deren Applikation eine GOOSE-Nachricht aussendet, für den Fall, dass keine Information in dem Kommunikationsmittel vorliegt, die Anfrage-Nachricht an den zentralen Rechner übertragen werden. Der zentrale Rechner erstellt dann eine entsprechende Information und überträgt diese an das Kommunikationsmittel bzw. die Energieautomatisierungskomponente, von der die Anfrage-Nachricht stammt. Dieses Vorgehen ist zweckmäßig, wenn beispielsweise eine neue Energieautomatisierungskomponente zu dem Netzwerk einer Umspannstation hinzugefügt wird.

Die einer jeweiligen Applikation zugeordnete Information kann in einer SCL (System Configuration description Language)-Konfigurationsdatei spezifiziert und bereitgestellt werden.

Die Information kann statische IP-Adressen der empfangenden Energieautomatisierungskomponente enthalten. Dies ist beispielsweise dann zweckmäßig wenn statische IP-Adressen in dem öffentlichen Netzwerk genutzt werden können. Die Konfiguration der Kommunikationsverbindungen zwischen einer sendenden Energieautomatisierungskomponente und einer oder mehreren empfangenden Energieautomatisierungskomponente(n) kann analog wie in der Umspannstation erfolgen.

Die Information jeder Energieautomatisierungskomponente kann zur Laufzeit des Energieautomatisierungs-Netzwerks verändert werden. Dies ergibt sich aus dem Umstand, dass die Konfigurationsdaten nicht in einer Komponente des öffentlichen Netzwerks, sondern in den Energieautomatisierungskomponenten enthalten sind, die unter der Kontrolle und dem Zugriff eines Betreibers des Energieautomatisierungs-Netzwerks sind.

Die Nachrichten können gemäß IEC 61850 durch das Kommunikationsmittel der sendenden Energieübertragungskomponente in Nachrichten des öffentlichen Netzwerks gemäß dem Internet Protokoll enkapsuliert werden.

Die Übertragung einer auszusendenden GOOSE-Nachricht an alle Empfänger kann auf unterschiedliche Weise erfolgen. In einer ersten Variante sendet die sendende Energieübertragungskomponente die zu sendende n Mal aus, wobei n der Anzahl der empfangenden Energieautomatisierungskomponenten entspricht, die der sendenden ersten Applikation in der Information zugeordnet sind. In diesem Fall tunnelt das Kommunikationsmittel die auszusendende GOOSE-Nachricht n mal an alle n in der Information enthaltenen Empfänger, d.h. Energieautomatisierungskomponenten.

In einer Alternative sendet die sendende Energieautomatisierungskomponente die zu sendende Nachricht einmal aus, wobei eine erste empfangende Energieautomatisierungskomponente diese an eine andere, zweite empfangende Energieautomatisierungskomponente weiterleitet. Diese Weiterleitung wird entsprechend der Anzahl der Empfänger wiederholt bis alle Empfänger die Nachricht erhalten haben. In diesem Fall verhält sich jeder Empfänger, d.h. jede empfangende Energieautomatisierungskomponente als sog. Peer in einem Peer-to-Peer(P2P)-Netzwerk und leitet die Nachricht an andere Empfänger, d.h. Energieautomatisierungskomponenten, weiter. Dies hat zur Folge, dass die sendende Energieautomatisierungskomponente die GOOSE-Nachricht nicht n mal versenden braucht, sondern lediglich ein einziges Mal an eine empfangende Energieautomatisierungskomponente, die die Nachricht dann weiterleitet. Die Weiterleitung kann so optimiert werden, dass der Lauf der Nachricht der Kommunikationsarchitektur folgt und damit geringe Latenzen entstehen. Dies ist beispielsweise bei der Realisierung des Energieübertragungs-Netzwerks als Ring zweckmäßig. Die GOOSE-Nachricht kann dann entlang des Rings "hopby-hop" übertragen werden.

In einer weiteren Ausgestaltung leitet jede eine Nachricht empfangende Energieautomatisierungskomponente die empfangene Nachricht in dem Kommunikationsnetzwerk der Umspannstation, in der sie angeordnet ist, als Multicast weiter.

Gemäß einem weiteren Aspekt wird eine Energieautomatisierungskomponente für eine Umspannstation vorgeschlagen. Die Energieautomatisierungskomponente umfasst zumindest eine Applikation zu deren Steuerung, wobei jede Applikation zur Verarbeitung von Nachrichten gemäß dem Standard IEC 61850 eingerichtet ist und zu einer Gruppe von Applikationen gehört, die in entsprechenden Energieautomatisierungskomponenten zumindest zweier Umspannstationen angeordnet sind. Die Energieautomatisierungskomponente umfasst ferner ein Kommunikationsmittel, das zur Verarbeitung von Nachrichten gemäß dem Standard IEC 61850 ausgebildet ist und diese in Nachrichten eines öffentlichen Netzwerks, das auf dem Internet Protokoll basiert und Multicast nicht unterstützt, enkapsulieren kann.

Die Energieautomatisierungskomponente umfasst eine Information oder kann auf diese zugreifen, welche eine jeweilige Adressinformation von empfangenden Energieautomatisierungskomponenten für die gleiche Gruppe, zu der die betreffende Applikation der Energieautomatisierungskomponente gehörig ist.

Das Kommunikationsmittel einer sendenden Energieautomatisierungskomponente ist dazu ausgebildet, einen Tunnel zu den empfangenden Energieautomatisierungskomponenten aufzubauen, zu denen eine Adressinformation gespeichert ist.

Die Energieautomatisierungskomponente weist die gleichen Vorteile auf, wie diese oben in Verbindung mit dem erfindungsgemäßen Verfahren beschrieben wurde.

Gemäß einem weiteren Aspekt wird eine Umspannstation für ein Energieautomatisierungs-Netzwerk vorgeschlagen, das zumindest eine Energieautomatisierungskomponente der oben beschriebenen Art umfasst.

Die Erfindung wird nachfolgend näher anhand eines Ausführungsbeispiels in der Zeichnung erläutert.

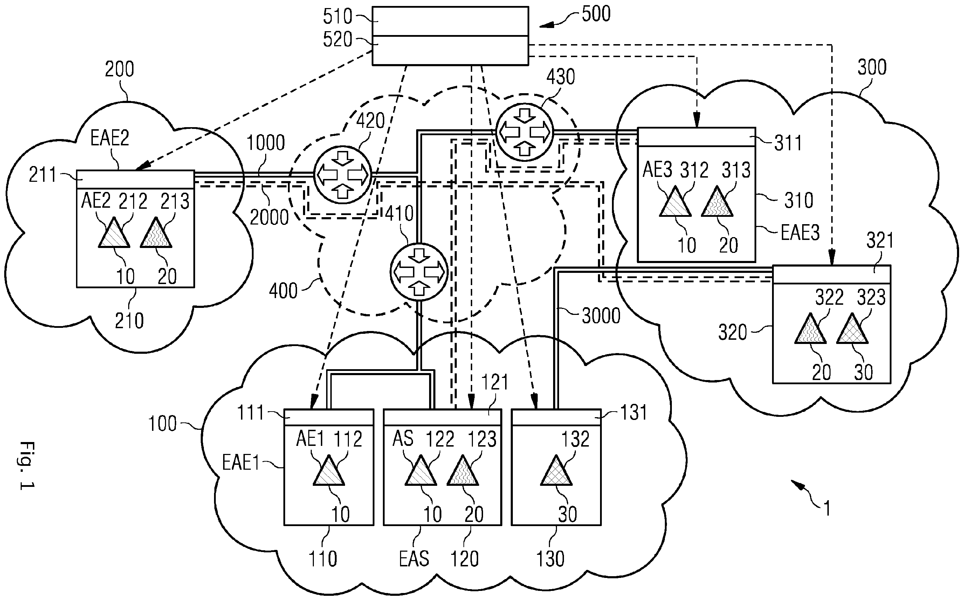

Fig. 1 zeigt eine schematische Darstellung eines Energieautomatisierungs-Netzwerks mit erfindungsgemäß ausgebildeten Energieautomatisierungskomponenten in mehreren Umspannstationen.

Die Fig. 1 zeigt eine schematische Darstellung eines Energieautomatisierungs-Netzwerks 1. Das Energieautomatisierungs-Netzwerk 1 umfasst beispielhaft drei Umspannstationen 100, 200 und 300. Die Umspannstationen 100, 200, 300 sind räumlich getrennt voneinander angeordnet. Die Umspannstationen, die auch als Umspannwerke bezeichnet werden, sind Teil eines elektrischen Versorgungsnetzes und dienen der Verbindung unterschiedlicher Spannungsebenen. In einer dem Fachmann bekannten Weise umfassen Umspannstationen neben Leistungstransformatoren, Schaltanlagen und Einrichtungen zur Mess- und Regeltechnik.

Für das Verständnis der Erfindung sind die für die Verbindung unterschiedlicher Spannungsebenen erforderlichen Komponenten von untergeordneter Bedeutung. Da dem Fachmann die hierzu notwendigen Komponenten und Verschaltungen bekannt sind, wird auf eine eingehende Beschreibung an dieser Stelle verzichtet. In der nachfolgenden Beschreibung wird daher lediglich auf die für eine Steuerung des Energieautomatisierungs-Netzwerks 1 erforderlichen Kommunikationskomponenten eingegangen.

Zu diesem Zweck umfasst jede der Umspannstationen 100, 200, 300 eine oder mehrere Energieautomatisierungskomponenten und ein Kommunikationsnetzwerk, über das die jeweiligen Energieautomatisierungskomponenten einer Umspannstation Nachrichten austauschen können.

Lediglich beispielhaft umfasst die Umspannstation 100 drei Energieautomatisierungskomponenten 110, 120, 130. Das die Energieautomatisierungskomponenten 110, 120, 130 zum Austausch von Nachrichten verbindende Kommunikationsnetzwerk ist nicht explizit dargestellt. Das Kommunikationsnetzwerk basiert auf dem Ethernet, so dass Nachrichten auf Schicht 2 (Layer-2) des OSI-Referenzmodells ausgetauscht werden.

Jede der Energieautomatisierungskomponenten 110, 120, 130 weist eine Anzahl an Applikationen auf. Beispielhaft ist auf der Energieautomatisierungskomponente 110 eine einzige Applikation 112 vorgesehen. Auf der Energieautomatisierungskomponente 120 sind beispielhaft zwei Applikationen 122, 123 vorgesehen. Auf der Energieautomatisierungskomponente 130 ist beispielhaft eine einzige Applikation 132 vorgesehen.

In entsprechender Weise weist die Umspannstation 200 lediglich beispielhaft eine einzige Energieautomatisierungskomponente 210 auf. Auf der Energieautomatisierungskomponente 210 sind wiederum lediglich beispielhaft zwei Applikationen 212, 213 angeordnet.

Lediglich zum Zwecke der Illustration umfasst die Umspannstation 300 zwei Energieautomatisierungskomponenten 310, 320. Jede der Energieautomatisierungskomponenten 310, 320 umfasst zwei Applikationen. Zwei Applikationen 312, 313 sind auf der Energieautomatisierungskomponente 310 angeordnet. Ebenfalls zwei Applikationen 322, 323 sind auf der Energieautomatisierungskomponente 320 angeordnet.

Auch für die Umspannstationen 200, 300 sind der Einfachheit halber jeweilige Kommunikationsnetzwerke nicht explizit dargestellt, die eine Kommunikation der in einer jeweiligen Umspannstation 200, 300 enthaltenen Energieautomatisierungskomponenten untereinander ermöglichen.

Eine Übertragung von Nachrichten zwischen den Energieautomatisierungskomponenten untereinander basiert auf dem Standard IEC 61850 (GOOSE), einem echtzeitfähigen Netzwerkprotokoll zur Steuerung der Energieautomatisierungskomponenten über das Ethernet-Kommunikationsnetzwerk (kurz: Ethernet-Netzwerk oder Ethernet), an das sie angeschlossen sind. Gemäß der Spezifikation versendet GOOSE Nachrichten über den Zustand einer Energieautomatisierungskomponente regelmäßig in einem festen Intervall. Die Nachrichten werden von anderen Energieautomatisierungskomponenten empfangen und verarbeitet, was ggf. ebenfalls zu einem Zustandswechsel der empfangenden Energieautomatisierungskomponenten führt.

Da der Schaltzustand bzw. ein Zustandswechsel einer Energieautomatisierungskomponente einer Umspannstation unter Umständen nicht nur für eine andere Automatisierungskomponente der gleichen Umspannstation, sondern auch für Energieautomatisierungskomponenten einer oder mehrerer anderer Umspannstationen von Bedeutung ist, sind die Kommunikationsnetzwerke der jeweiligen Umspannstationen 100, 200, 300 über ein öffentliches, auf dem Internet Protokoll basierendes Netzwerk ohne Multicast-Unterstützung zum Austausch von Nachrichten miteinander verbunden. Die Verbindung der Kommunikationsnetzwerke der Umspannstationen 100, 200, 300 erfolgt über den Umspannstationen zugeordnete Netzwerkknoten 410, 420, 430, z.B. Router. Damit ist es beispielsweise einer Energieautomatisierungskomponente der Umspannstation 100 möglich Nachrichten mit einer Energieautomatisierungskomponente in den Umspannstationen 200 oder 300 auszutauschen.

Die Übertragung von Nachrichten innerhalb des öffentlichen Netzwerks 400, welches beispielsweise das Internet oder ein globales Netzwerk darstellt, erfolgt aus technischen Gründen und/oder aus Kostengründen in der Regel auf Schicht 3 des OSI-Referenzmodells. Dies bedeutet, soll eine Nachricht von einem ersten Kommunikationsknoten des öffentlichen Netzwerks 400 zu einem zweiten Kommunikationsknoten des öffentlichen Netzwerks 400 übertragen werden, so wird hierzu eine Route und eine Ende-zu-Ende Verbindung erstellt. Dieses Routing erfolgt auf Schicht 3 (Layer-3) des OSI-Referenzmodells. Da dieses von Haus aus kein Multicast unterstützt, was für die Verwendung von mittels GOOSE ausgesendeten Nachrichten erforderlich ist, wird ein Vorgehen vorgeschlagen, das auch in verteilten Routing-Netzwerken eine Layer-2-Nachrichtenübertragung erlaubt, ohne eine Ende-zu-Ende Layer-2 Infrastruktur über das öffentliche Netzwerk 400 voraussetzen zu müssen.

Hierzu verfügen sämtliche der Energieautomatisierungskomponenten 110, 120, 130, 210, 310, 320 über ein ihnen zugeordnetes Kommunikationsmittel 111, 121, 131, 211, 311, 321. Durch diese Kommunikationsmittel ist es nicht erforderlich, spezielle Netzwerkkomponenten in dem öffentlichen Netzwerk 400 einzusetzen. Die notwendige Netzwerkintelligenz wird durch die Kommunikationsmittel 111, 121, 131, 211, 311, 321 in Gestalt eines virtuellen Switches auf der zugeordneten Energieautomatisierungskomponente 110, 120, 130, 210, 310, 320 selbst realisiert. Dies kann beispielsweise mittels OpenvSwitch realisiert werden.

Die Kommunikationsmittel 111, 121, 131, 211, 311, 321 übernehmen die Funktionen eines Tunnelaufbaus zwischen virtualisierten Switches (Kommunikationsmitteln), die Identifikation von GOOSE-Nachrichten sowie des Weiterleitens von GOOSE-Nachrichten über ein entsprechendes Tunnel-Interface. Für den Tunnel können verschiedene Enkapsulierungsprotokolle genutzt werden. Beispielsweise kann hierzu das "Stateless Transport Tunneling Protocol for Network Virtualization (STT)" genutzt werden.

Die Konfiguration der Kommunikationsmittel 111, 121, 131, 211, 311, 321, welche in Gestalt von Software oder Hardware ausgebildet sein können, kann durch einen zentralen Rechner 500 realisiert werden. Der zentrale Rechner 500 umfasst hierzu ein Engineering Tool 510 und einen sog. SDN (Software Defined Networks) Controller 520. Mittels des Engineering Tools 510 erfolgt eine Konfiguration der Energieautomatisierungskomponenten 110, 120, 130, 210, 310, 320 sämtlicher Umspannstationen 100, 200, 300. Im Rahmen der Konfiguration erfolgt eine Parametrierung sämtlicher Energieautomatisierungskomponenten. Dies bedeutet, es wird festgelegt, welche Energieautomatisierungskomponenten logisch zusammen gehören. Die logische Zusammengehörigkeit wird durch die Zuordnung einer jeweiligen Applikation der Energieautomatisierungskomponenten zu einer jeweiligen Gruppe hergestellt.

Im Ausführungsbeispiel der Fig. 1 sind drei logische Gruppen 10, 20, 30 vorgesehen. So gehören beispielhaft die Applikation 112 der Energieautomatisierungskomponente 110, die Applikation 122 der Energieautomatisierungskomponente 120, die Applikation 212 der Energieautomatisierungskomponente 210 und die Applikation 312 der Energieautomatisierungskomponente 310 zu einer ersten Gruppe 10 von Applikationen. Die Applikation 123 der Energieautomatisierungskomponente 120, die Applikation 213 der Energieautomatisierungskomponente 210, die Applikation 313 der Energieautomatisierungskomponente 310 und die Applikation 322 der Energieautomatisierungskomponente 320 gehören zu einer zweiten Gruppe 20 von Applikationen. Die Applikation 132 der Energieautomatisierungskomponente 130 und die Applikation 322 der Energieautomatisierungskomponente 320 sind einer dritten Gruppe 30 von Applikationen zugeordnet.

Die logische Gruppierung der Applikationen in Verbindung mit den, einer jeweiligen Energieautomatisierungskomponente zugeordneten Kommunikationsmitteln hat zur Folge, dass beispielsweise beim Aussenden einer GOOSE-Nachricht durch die Applikation 122 (sendende Applikation AS) der ersten Gruppe 10 die GOOSE-Nachricht über ein der ersten Gruppe 10 zugeordnetes, logisches Kommunikationsnetzwerk 1000 lediglich an die Energieautomatisierungskomponenten 110, 210 und 310 (empfangende Energieautomatisierungskomponenten EAE1, EAE2, EAE3) übertragen wird, welche zu der ersten Gruppe 10 gehörige Applikationen 112, 212, 312 (empfangende Applikationen AE1, AE2, AE3) umfassen. Obwohl die GOOSE-Nachricht von der Energieautomatisierungskomponente 120 bzw. deren Kommunikationsmittel 121 gemäß der Spezifikation von GOOSE als Multicast ausgesendet wird, hat dies zur Folge, dass die Energieautomatisierungskomponente 130, welche keine zur ersten Gruppe 10 von Applikationen gehörige Applikation umfasst, diese GOOSE-Nachricht nicht erhält. Dadurch wird das Kommunikationsnetzwerk der Substation 100 von unnötiger Kommunikation befreit.

Für jede der weiteren logischen Gruppierungen von Applikationen, d.h. jede der Gruppen 20, 30, ist in der oben beschriebenen Weise ein eigenes, logisches Kommunikationsnetzwerk 2000, 3000 erzeugt.

Die Konfiguration und Parametrierung der Energieautomatisierungskomponenten 110, 120, 130, 210, 310, 320 und die damit zwischen den einzelnen Energieautomatisierungskomponenten einhergehenden Kommunikationsverbindungen werden in einer Planungsphase, z.B. nach IEC 61850 in der sog. Substation Configuration Language (SCL), spezifiziert. Zur Konfiguration der Kommunikationsmittel 111, 121, 131, 211, 311, 321 können z.B. statische IP-Adressen, sofern diese von dem öffentlichen Netzwerk 400 unterstützt werden, verwendet werden. Dabei wird zwischen jeder möglichen sendenden Energieautomatisierungskomponente und jeder zugeordneten, empfangenden Energieautomatisierungskomponente gemäß der logischen Gruppierung eine Kommunikationsverbindung konfiguriert. Die betreffenden Applikationen bekommen die Konfiguration in der SCL spezifiziert. In den Kommunikationsmitteln werden die Tunnel z.B. manuell konfiguriert und entsprechende Weiterleitungsregel definiert. Das Engineering Tool 510 speichert und verwaltet entsprechende SCL-Konfigurationsdateien und kann diese Dateien oder Teile davon an entsprechenden Netzwerkkomponenten übermitteln.

Alternativ kann eine zentralisierte Konfiguration der Kommunikationsmittel 111, 121, 131, 211, 311, 321 erfolgen. Diese Konfiguration erfolgt durch den SDN-Controller 520 des zentralen Rechners. Der SDN-Controller 520 kann die Tunnel zwischen den einzelnen Kommunikationsmitteln konfigurieren und aktivieren. Hierzu werden Weiterleitungstabellen in den Kommunikationsmitteln konfiguriert. Eine solche Weiterleitungstabelle wird für jede Applikation 111, 121, 131, 211, 311, 312 der Energieautomatisierungskomponenten 110, 120, 130, 210, 310, 320 konfiguriert.

Es wird beispielsweise angenommen, dass die Applikation 122 der Energieautomatisierungskomponente 120 eine sendende Applikation AS und die Energieautomatisierungskomponente 120 eine sendende Energieautomatisierungskomponente EAS ist. Die Applikation 122 gehört zur ersten Gruppe 10 von Applikationen. In der Weiterleitungstabelle für die Applikation 122 werden daher die Adressen sämtlicher verbleibender Applikationen, welche zur ersten Gruppe 10 von Applikationen gehören, hinterlegt. In diesem Beispiel stellt die Applikation 112 eine empfangende Applikation AE1, die Applikation 212 eine empfangende Applikation AE2 und die Applikation 312 eine empfangende Applikation AE3 dar. Die empfangende Applikation AE1 ist auf der Energieautomatisierungskomponente 110 angeordnet, so dass deren Adresse in der Weiterleitungstabelle hinterlegt wird. Die empfangenden Applikationen AE2 und AE3 sind in der Energieautomatisierungskomponente 210 bzw. 310 (EAE2 bzw. EAE3) enthalten, so dass deren Adressen in der Weiterleitungstabelle hinterlegt werden. Dieses Vorgehen wird entsprechend für alle weiteren Applikationen, die sendende Applikationen sein können, entsprechend durchgeführt. Diese Art der Konfiguration der Weiterleitungstabellen kann proaktiv, d.h. initial vor der Inbetriebnahme des Energieautomatisierungs-netzwerks 1 erfolgen.

Alternativ kann die Konfiguration auch reaktiv erfolgen. In diesem Fall wird beispielsweise eine GOOSE-Nachricht von der sendenden Applikation AS (Applikation 122 auf der Energieautomatisierungskomponente 120) durch das Kommunikationsmittel 121 empfangen. Das Kommunikationsmittel 121 überprüft, ob eine Weiterleitungstabelle für die Gruppe 10 von Applikationen vorliegt. Liegt kein Eintrag in der Weiterleitungstabelle des Kommunikationsmittels 121 vor, so kontaktiert das Kommunikationsmittel 121 den zentralen Rechner 500 bzw. den SDN-Controller 520. Dieser erstellt einen Weiterleitungseintrag bzw. eine Weiterleitungstabelle und überträgt diesen bzw. diese an das Kommunikationsmittel 121, so dass nun eine Weiterleitungstabelle vorliegt. Diese wird dann für die zu erstellenden Kommunikationsverbindungen genutzt.

Der SDN-Controller 520 kann als Komponente des Engineering Tools 510 oder separat davon realisiert sein.

Dieses Verfahren verknüpft die Netzwerkkonfiguration eng mit der Automatisierungsfunktion von GOOSE und ermöglicht somit eine einfache Administration des gesamten Energieautomatisierungs-Netzwerks.

Der Ablauf der Übertragung von GOOSE-Nachrichten zwischen in verschiedenen Umspannstationen 100, 200, 300 angeordneten Energieautomatisierungskomponenten 110, 120, 130, 210, 310, 320 ist wie folgt. Es wird dabei wiederum davon ausgegangen, dass die Applikation 122 als sendende Applikation AS eine GOOSE-Nachricht senden möchte, welche an die zu ihrer Gruppe 10 von Applikationen gehörigen Applikationen 112, 212, 312 als empfangende Applikationen AE1, AE2, AE3 übertragen werden soll.

Die Applikation 122 sendet als sendende Applikation AS eine GOOSE-Nachricht gemäß IEC 61850 im Kommunikationsnetzwerk der Umspannstation 100 aus. Das Kommunikationsmittel 121 (d.h. der virtuelle Switch) der sendenden Energieautomatisierungskomponente EAS empfängt die GOOSE-Nachricht aus dem Kommunikationsnetzwerk. In dem Kommunikationsmittel 121 wurde, wie oben beschrieben, eine Weiterleitungstabelle erzeugt, die die für die GOOSE-Nachricht jeweiligen Zieleinträge der empfangenden Energieautomatisierungskomponenten 110, 210, 310 (EAE1, EAE2, EAE3) beinhaltet. Tunnel zu jeder der Energieautomatisierungskomponenten 110, 210, 310 wurden bereits aufgebaut und bilden so ein für diesen GOOSE Service dediziertes Overlay-Netzwerk. Aus der Weiterleitungstabelle wird das bzw. werden die Schnittstellen ermittelt, auf denen die GOOSE-Nachricht weitergeleitet wird. Hierunter ist der nächste Hop, an den die GOOSE-Nachricht übertragen werden soll, zu verstehen. Dies könnte beispielsweise der Router 410 des öffentlichen Netzwerks 400 in Fig. 1 sein. Abhängig vom Tunnelmechanismus werden die GOOSE-Nachrichten durch das Kommunikationsmittel 121 z.B. in IP-Unicast-Pakete enkapsuliert und über das öffentliche Netzwerk übertragen.

Das Kommunikationsmittel 121 kann in einer Alternative die GOOSE-Nachricht n Mal, d.h. im vorliegenden Fall drei Mal, an die in der Weiterleitungstabelle spezifizierten empfangenden Energieautomatisierungskomponenten 110, 210, 310 nacheinander aussenden. Allgemein ist n die Anzahl der in der Weiterleitungstabelle enthaltenen Empfänger der GOOSE-Nachricht.

In einer alternativen Ausgestaltung verhalten sich die empfangenden Energieautomatisierungskomponenten EAE1, EAE2, EAE3 als Peers in einem P2P-Netzwerk und leiten die GOOSE-Nachricht an eine andere empfangende Energieautomatisierungskomponente weiter. Beispielsweise empfängt die empfangende Energieautomatisierungskomponente EAE1 die GOOSE-Nachricht von der sendenden Energieautomatisierungskomponente EAS und leitet die Nachricht selbst an die empfangende Energieautomatisierungskomponente EAE2 weiter. Die empfangende Energieautomatisierungskomponente EAE2 leitet die GOOSE-Nachricht dann an die empfangende Energieautomatisierungskomponente EAE3 weiter.

Die sendende Energieautomatisierungskomponente EAS bzw. deren Kommunikationsmittel 121 muss die Nachricht somit lediglich ein einziges Mal aussenden. Dieser Weiterleitungsmechanismus kann so optimiert werden, dass er beispielsweise der Kommunikationsarchitektur folgt, wodurch geringe Latenzen entstehen. Beispielsweise wird für FLISR in einem Verteilnetz GOOSE verwendet. Mittel- oder Niederspannungsnetzwerke sind typischerweise in Ringform realisiert. Als Kommunikationstechnologie wird Powerline Communication (PLC) verwendet. Der GOOSE-Applikations-Multicast-Service wird dann so konfiguriert, dass die GOOSE-Nachricht entlang des Rings hop-by-hop übertragen wird.

Die Nachricht wird durch das jeweilige Kommunikationsmittel 111, 211, 311 der empfangenden Kommunikationskomponente EAE1, EAE2, EAE3 empfangen. Das Kommunikationsmittel leitet die Nachricht im jeweiligen Kommunikationsnetzwerk der Umspannstation als Ethernet-Multicast weiter. Alternativ kann der GOOSE-Empfänger auch direkt die entsprechende Energieautomatisierungskomponente sein. Innerhalb der Energieautomatisierungskomponente EAE1, EAE2, EAE3 wird die Nachricht an die zu der ersten Gruppe von Applikationen gehörige Applikation AE1, AE2, AE3 weitergeleitet, welche diese dann verarbeitet.

Im Gegensatz zu einem Layer-2-VPN, welches eine Konfiguration des VPN (Virtual Private Network) in einem Router des öffentlichen Netzwerks erfordert, realisiert das vorgeschlagene Verfahren ein GOOSE-spezifisches Applikations-Overlay-Netzwerk. Dies bedeutet, nur GOOSE-Nachrichten werden in diesem Overlay-Netzwerk verteilt. Die GOOSE-Nachrichten werden nur an empfangende Energieautomatisierungskomponenten gesendet, die in der entsprechenden Systemkonfiguration spezifiziert sind.

Das Vorgehen weist den Vorteil auf, dass eine zentrale Konfiguration möglich ist. Ferner sind keine Eingriffe in die Software oder Hardware von Komponenten des öffentlichen Netzwerks 400 erforderlich.

## Patentansprüche

1. Verfahren zum Übertragen von Nachrichten gemäß dem Standard IEC 61850 in einem Energieautomatisierungs-Netzwerk (1), das eine Anzahl an Umspannstationen (100; 200; 300) umfasst, wobei
- jede der Umspannstationen (100; 200; 300) zumindest eine Energieautomatisierungskomponente (110, 120, 130; 210; 310, 320) und ein Kommunikationsnetzwerk umfasst, über das die zumindest eine Energieautomatisierungskomponente (110, 120, 130; 210; 310, 320) Nachrichten gemäß einem ersten Kommunikationsprotokoll austauschen können;
- die Kommunikationsnetzwerke der Umspannstationen (100, 200, 300) über ein öffentliches, auf einem zweiten Kommunikationsprotokoll, insbesondere dem Internet Protokoll, basierendes Netzwerk (400) zum Austausch von Nachrichten miteinander verbunden sind;
- jede der Energieautomatisierungskomponenten (110, 120, 130; 210; 310, 320) zumindest eine Applikation (112, 122, 123, 132; 212, 213; 312, 313, 322, 323) zu deren Steuerung umfasst, wobei zwischen Applikationen (112, 122, 123, 132; 212, 213; 312, 313, 322, 323), die zu einer Gruppe (10, 20 30) gehören und in Energieautomatisierungskomponenten (110, 120, 130; 210; 310, 320) zumindest zweier Umspannstationen (100, 200, 300) angeordnet sind, Nachrichten gemäß dem Standard IEC 61850 ausgetauscht werden können;
- jede der Energieautomatisierungskomponenten (110, 120, 130; 210; 310, 320) ein Kommunikationsmittel (111, 121, 131; 211; 311, 321) umfasst, welches zur Verarbeitung von Nachrichten gemäß dem Standard IEC 61850 ausgebildet ist, bei dem
a) durch eine erste Applikation (AS) einer sendenden Energieautomatisierungskomponente (EAS) eine Nachricht gemäß dem Standard IEC 61850 ausgesendet wird;
b) die Nachricht durch das Kommunikationsmittel (121) der sendenden Energieautomatisierungskomponente (EAS) empfangen, verarbeitet und über das Kommunikationsnetzwerk der Umspannstation (100), in der die sendende Energieautomatisierungskomponente (EAS) angeordnet ist, und/oder das öffentliche Netzwerk (400) an zumindest eine zweite Applikation (112; 212; 312) übertragen wird;
c) die Nachricht von dem oder den Kommunikationsmitteln (111) der eine jeweilige zweite Applikation (AE1; AE2; AE3) umfassenden empfangenen Energieautomatisierungskomponente (EAE1; EAE2; EAE3) empfangen, verarbeitet und an die zugeordnete zweite Applikation (AE1; AE2; AE3) weitergeleitet wird;
**dadurch gekennzeichnet, dass**
- die erste Applikation (AS) zu einer bestimmten Gruppe (10) von Applikationen gehört und die zumindest eine zweite Applikation (112; 212; 312) zu der gleichen Gruppe (10) gehört;
- die Kommunikationsmittel (111, 121, 131; 211; 311, 321) einer jeweiligen Energieautomatisierungskomponente (110, 120, 130; 210; 310, 320) konfiguriert werden, indem für jede in der betreffenden Energieautomatisierungskomponente (110, 120, 130; 210; 310, 320) enthaltene Applikation (112, 122, 123, 132; 212, 213; 312, 313, 322, 323) als erste Applikation (AS) eine Information erzeugt wird, welche eine jeweilige Adressinformation der empfangenden Energieautomatisierungskomponenten (EAE1; EAE2; EAE3) für die gleiche Gruppe (10, 20, 30), zu der die betreffende zweite Applikation (AE1; AE2; AE3) gehörig ist, umfasst;
- zum Übertragen der Nachricht von der sendenden Energieübertragungskomponente (EAS) mittels der Adressinformationen der empfangenden Energieautomatisierungskomponenten (EAE1; EAE2; EAE3) ein Tunnel zu den empfangenden Energieautomatisierungskomponenten (EAE1; EAE2; EAE3) über das öffentliche Netzwerk (400) aufgebaut wird.

2. Verfahren nach Anspruch 1 oder 2, bei dem die erzeugte Information eine Weiterleitungstabelle ist.

3. Verfahren nach einem der vorhergehenden Ansprüche, bei dem die Erzeugung der Information durch einen zentralen Rechner (500) gleichzeitig für alle Energieautomatisierungskomponenten (110, 120, 130; 210; 310, 320) vor der Inbetriebnahme des Energieautomatisierungs-Netzwerks (1) erfolgt.

4. Verfahren nach Anspruch einem der vorhergehenden Ansprüche, bei dem die Erzeugung der Information, insbesondere im laufenden Betrieb des Energieautomatisierungs-Netzwerks (1), in Reaktion auf den Erhalt einer Anfrage-Nachricht von einer der Energieautomatisierungskomponenten (110, 120, 130; 210; 310, 320) erfolgt.

5. Verfahren nach einem der vorhergehenden Ansprüche, die Information in einer SCL-Konfigurationsdatei bereit gestellt wird.

6. Verfahren nach einem der vorhergehenden Ansprüche, bei dem die Information statische IP-Adressen der empfangenden Energieautomatisierungskomponenten (EAE1; EAE2; EAE3) enthält.

7. Verfahren nach einem der vorhergehenden Ansprüche, bei dem die Information jeder Energieautomatisierungskomponente (110, 120, 130; 210; 310, 320) zur Laufzeit des Energieautomatisierungs-Netzwerks (1) veränderbar ist.

8. Verfahren nach einem der vorhergehenden Ansprüche, bei dem die Nachrichten gemäß IEC 61850 durch das Kommunikationsmittel der sendenden Energieübertragungskomponente (EAS) in Nachrichten des öffentlichen Netzwerks (400) gemäß dem Internet Protokoll enkapsuliert werden.

9. Verfahren nach einem der vorhergehenden Ansprüche, bei dem die sendende Energieübertragungskomponente (EAS) die zu sendende Nachricht n Mal aussendet, wobei n der Anzahl der empfangenden Energieautomatisierungskomponenten (EAE1; EAE2; EAE3) entspricht, die der sendenden ersten Applikation (EAS) in der Information zugeordnet sind.

10. Verfahren nach einem der vorhergehenden Ansprüche, bei dem die sendende Energieautomatisierungskomponente (EAS) die zu sendende Nachricht einmal aussendet, wobei eine erste empfangende Energieautomatisierungskomponente (EAE2) diese an eine andere, zweite empfangende Energieautomatisierungskomponente (EAE3) weiterleitet.

11. Verfahren nach einem der vorhergehenden Ansprüche, bei dem jede eine Nachricht empfangende Energieautomatisierungskomponente (EAE1; EAE2; EAE3) die empfangene Nachricht in dem Kommunikationsnetzwerk der Umspannstation (100, 200, 300), in der sie angeordnet ist, als Multicast weiterleitet.

12. Energieautomatisierungskomponente (110, 120, 130; 210; 310, 320) für eine Umspannstation (100, 200, 300), umfassend:
- zumindest eine Applikation (112, 122, 123, 132; 212, 213; 312, 313, 322, 323) zu deren Steuerung, wobei jede Applikation (112, 122, 123, 132; 212, 213; 312, 313, 322, 323) zur Verarbeitung von Nachrichten gemäß dem Standard IEC 61850 eingerichtet ist ;
- ein Kommunikationsmittel (111, 121, 131; 211; 311, 321), welches zur Verarbeitung von Nachrichten gemäß dem Standard IEC 61850 ausgebildet ist und diese in Nachrichten eines öffentlichen Netzwerks (400), das auf dem Internet Protokoll basiert, enkapsulieren kann;
**dadurch gekennzeichnet, dass**
- jede Applikation (112, 122, 123, 132; 212, 213; 312, 313, 322, 323) zu einer Gruppe (10, 20, 30) von Applikationen (112, 122, 123, 132; 212, 213; 312, 313, 322, 323) gehört, die in entsprechenden Energieautomatisierungskomponenten (110, 120, 130; 210; 310, 320) zumindest zweier Umspannstationen (100, 200, 300) angeordnet sind
- diese eine Information umfasst oder auf diese zugreifen kann, welche eine jeweilige Adressinformation von empfangenden Energieautomatisierungskomponenten (EAE1; EAE2; EAE3) für die gleiche Gruppe (10, 20, 30), zu der die betreffende Applikation (AE1. AE2, AE3) der Energieautomatisierungskomponente gehörig ist, umfasst;
- das Kommunikationsmittel (111, 121, 131; 211; 311, 321) einer sendenden Energieautomatisierungskomponente (EAS) dazu ausgebildet ist, einen Tunnel zu den empfangenden Energieautomatisierungskomponenten (EAE1; EAE2; EAE3) aufzubauen, zu denen eine Adressinformation gespeichert ist.

13. Umspannstation (100, 200, 300) für ein Energieautomatisierungs-Netzwerk (1), umfassend zumindest eine Energieautomatisierungskomponente (110, 120, 130; 210; 310, 320) gemäß Anspruch 12.

## Claims

1. Method for transmitting messages according to the standard IEC 61850 in an energy automation network (1) which comprises a number of substations (100; 200; 300),
wherein
- each of the substations (100; 200; 300) comprises at least one energy automation component (110, 120, 130; 210; 310, 320) and a communication network via which the at least one energy automation component (110, 120, 130; 210; 310, 320) can exchange messages according to a first communication protocol;
- the communication networks of the substations (100, 200, 300) are connected to one another for exchanging messages via a public network (400) based on a second communication protocol, in particular the Internet protocol, without multicast support;
- each of the energy automation components (110, 120, 130; 210; 310, 320) comprises at least one application (112, 122, 123, 132; 212, 213; 312, 313, 322, 323) for controlling it, wherein messages can be exchanged according to the standard IEC 61850 between applications (112, 122, 123, 132; 212, 213; 312, 313, 322, 323) that belong to a group (10, 20, 30) and are arranged in energy automation components (110, 120, 130; 210; 310, 320) of at least two substations (100, 200, 300);
- each of the energy automation components (110, 120, 130; 210; 310, 320) comprises a communication means (111, 121, 131; 211; 311, 321) which is designed for processing messages according to the standard IEC 61850,
in which
a) a message is sent according to the standard IEC 61850 by a first application (AS) of a sending energy automation component (EAS);
b) the message is received by the communication means (121) of the sending energy automation component (EAS), processed and transmitted via the communication network of the substation (100) in which the sending energy automation component (EAS) is arranged and/or the public network (400) to at least one second application (112; 212; 312);
c) the message is received by the communication means (111) of the receiving energy automation component (EAE1; EAE2; EAE3) comprising a respective second application (AE1; AE2; AE3), processed and forwarded to the assigned second application (AE1; AE2; AE3),
**characterized in that**
- the first application (AS) belongs to a particular group (10) of applications and the at least one second application (112; 212; 312) belongs to the same group (10);
- the communication means (111, 121, 131; 211; 311, 321) of a respective energy automation component (110, 120, 130; 210; 310, 320) are configured by generating for each application (112, 122, 123, 132; 212, 213; 312, 313, 322, 323) contained in the energy automation component (110, 120, 130; 210; 310, 320) concerned as a first application (AS) an item of information which comprises a respective item of address information of the receiving energy automation components (EAE1; EAE2; EAE3) for the same group (10, 20, 30) to which the second application (AE1; AE2; AE3) concerned belongs,
- for transmitting the message from the sending energy transmission component (EAS) by means of the items of address information of the receiving energy automation components (EAE1; EAE2; EAE3), a tunnel to the receiving energy automation components (EAE1; EAE2; EAE3) is set up via the public network (400).

2. Method according to Claim 1 or 2, in which the generated information is a forwarding table.

3. Method according to one of the preceding claims, in which the generation of the information is performed by a central computer (500) simultaneously for all of the energy automation components (110, 120, 130; 210; 310, 320) before the energy automation network (1) is put into operation.

4. Method according to one of the preceding claims, in which the generation of the information, in particular in the course of the operation of the energy automation network (1), is performed in response to receiving a request message from one of the energy automation components (110, 120, 130; 210; 310, 320) .

5. Method according to in one of the preceding claims, in which the information is provided in an SCL configuration file.

6. Method according to one of the preceding claims, in which the information includes static IP addresses of the receiving energy automation components (EAE1; EAE2; EAE3).

7. Method according to one of the preceding claims, in which the information of each energy automation component (110, 120, 130; 210; 310, 320) can be changed at the running time of the energy automation network (1).

8. Method according to one of the preceding claims, in which, according to IEC 61850, the messages are encapsulated by the communication means of the sending energy transmission component (EAS) in messages of the public network (400) according to the Internet protocol.

9. Method according to one of the preceding claims, in which the sending energy transmission component (EAS) sends the message to be sent n times, n corresponding to the number of receiving energy automation components (EAE1; EAE2; EAE3) that are assigned to the sending first application (EAS) in the information.

10. Method according to one of the preceding claims, in which the sending energy automation component (EAS) sends the message to be sent once, a first receiving energy automation component (EAE2) forwarding this message to another, second receiving energy automation component (EAE3).

11. Method according to one of the preceding claims, in which each energy automation component (EAE1; EAE2; EAE3) receiving a message forwards the received message as multicast in the communication network of the substation (100, 200, 300) in which it is arranged.

12. Energy automation component (110, 120, 130; 210; 310, 320) for a substation (100, 200, 300), comprising:
- at least one application (112, 122, 123, 132; 212, 213; 312, 313, 322, 323) for controlling it, each application (112, 122, 123, 132; 212, 213; 312, 313, 322, 323) being set up for processing messages according to the standard IEC 61850;
- a communication means (111, 121, 131; 211; 311, 321), which is designed for processing messages according to the standard IEC 61850 and can encapsulate these in messages of a public network (400) that is based on the Internet protocol, **characterized in that**
- each application (112, 122, 123, 132; 212, 213; 312, 313, 322, 323) belongs to a group (10, 20, 30) of applications (112, 122, 123, 132; 212, 213; 312, 313, 322, 323) that are arranged in corresponding energy automation components (110, 120, 130; 210; 310, 320) of at least two substations (100, 200, 300)
- the latter comprises an item of information or can access said item of information which comprises a respective item of address information of receiving energy automation components (EAE1; EAE2; EAE3) for the same group (10, 20, 30) to which the application (AE1, AE2, AE3) concerned of the energy automation component belongs;
- the communication means (111, 121, 131; 211; 311, 321) of a sending energy automation component (EAS) is designed to set up a tunnel to the receiving energy automation components (EAE1; EAE2; EAE3) for which an item of address information is stored.

13. Substation (100, 200, 300) for an energy automation network (1), comprising at least one energy automation component (110, 120, 130; 210; 310, 320) according to Claim 12.

## Revendications

1. Procédé de transmission de messages selon la norme IEC 61850 dans un réseau d'automatisation d'énergie (1) qui comprend un nombre de postes de transformation (100 ; 200 ; 300),
- chacun des postes de transformation (100 ; 200 ; 300) comprenant au moins un composant d'automatisation d'énergie (110, 120, 130 ; 210 ; 310, 320) et un réseau de communication via lequel l'au moins un composant d'automatisation d'énergie (110, 120, 130 ; 210 ; 310, 320) peut échanger des messages selon un premier protocole de communication ;
- les réseaux de communication des postes de transformation (100, 200, 300) étant reliés entre eux via un réseau public (400) basé sur un deuxième protocole de communication, plus particulièrement sur le protocole Internet afin d'échanger des messages ;
- chacun des composants d'automatisation d'énergie (110, 120, 130 ; 210 ; 310, 320) comprenant au moins une application (112, 122, 123, 132 ; 212, 213 ; 312, 313, 322, 323) pour leur commande, entre des applications (112, 122, 123, 132 ; 212, 213 ; 312, 313, 322, 323) appartenant à un groupe (10, 20, 30) et agencées dans des composants d'automatisation d'énergie (110, 120, 130 ; 210 ; 310, 320) d'au moins deux postes de transformation (100, 200, 300) des messages pouvant être échangés selon la norme IEC 60850 ;
- chacun des composants d'automatisation d'énergie (110, 120, 130 ; 210 ; 310, 320) comprenant un moyen de communication (111, 121, 131 ; 211 ; 311, 321) qui est conçu pour traiter des messages selon la norme IEC 61850,
dans lequel
a) une première application (AS) d'un composant d'automatisation d'énergie émetteur (EAS) émet un message selon la norme IEC 61850 ;
b) le message est reçu et traité par le moyen de communication (121) du composant d'automatisation d'énergie émetteur (EAS) et transmis à au moins une deuxième application (112 ; 212 ; 312) via le réseau de communication du poste de transformation (100) dans lequel est agencé le composant d'automatisation d'énergie émetteur (EAS), et/ou via le réseau public (400) ;
c) le message est reçu et traité par le ou les moyens de communication (111) du composant d'automatisation d'énergie récepteur (EAE1 ; EAE2 ; EAE3) comprenant une deuxième application respective (AE1 ; AE2 ; AE3) et est retransmis à la deuxième application associée (AE1 ; AE2 ; AE3) ;
**caractérisé en ce que** :
- la première application (AS) fait partie d'un groupe déterminé (10) d'applications et l'au moins une deuxième application (112 ; 212 ; 312) fait partie du même groupe (10) ;
- les moyens de communication (111, 121, 131 ; 211 ; 311, 321) d'un composant d'automatisation d'énergie respectif (110, 120, 130 ; 210 ; 310, 320) sont configurés par le fait qu'est générée, pour chaque application (112, 122, 123, 132 ; 212, 213 ; 312, 313, 322, 323) contenue dans le composant d'automatisation d'énergie concerné (110, 120, 130 ; 210 ; 310, 320), en tant que première application (AS), une information qui comprend une information d'adresse respective des composants d'automatisation d'énergie récepteurs (EAE1 ; EAE2 ; EAE3) pour le même groupe (10, 20, 30), dont fait partie la deuxième application concernée (AE1 ; AE2 ; AE3) ;
- un tunnel vers les composants d'automatisation d'énergie récepteurs (EAE1 ; EAE2 ; EAE3) étant établi via le réseau public (400) pour transmettre le message du composant de transmission d'énergie émetteur (EAS) au moyen des informations d'adresse des composants d'automatisation d'énergie récepteurs (EAE1 ; EAE2 ; EAE3).

2. Procédé selon la revendication 1 ou 2, dans lequel l'information générée est un tableau de retransmission.

3. Procédé selon l'une des revendications précédentes, dans lequel la génération de l'information est effectuée par un ordinateur central (500) en même temps pour tous les composants d'automatisation d'énergie (110, 120, 130 ; 210 ; 310, 320) avant la mise en service du réseau d'automatisation d'énergie (1).

4. Procédé selon l'une des revendications précédentes, dans lequel la génération de l'information a lieu, en particulier en cours de fonctionnement du réseau d'automatisation d'énergie (1), en réaction à la réception d'un message de requête de l'un des composants d'automatisation d'énergie (110, 120, 130 ; 210 ; 310, 320) .

5. Procédé selon l'une des revendications précédentes, l'information étant fournie dans un fichier de configuration SCL.

6. Procédé selon l'une des revendications précédentes, dans lequel l'information contient des adresses IP statiques des composants d'automatisation d'énergie récepteurs (EAE1 ; EAE2 ; EAE3).

7. Procédé selon l'une des revendications précédentes, dans lequel peut être modifiée l'information de chaque composant d'automatisation d'énergie (110, 120, 130 ; 210 ; 310, 320) concernant le temps de fonctionnement du réseau d'automatisation d'énergie (1).

8. Procédé selon l'une des revendications précédentes, dans lequel les messages selon IEC 61850 sont encapsulés par le moyen de communication du composant de transmission d'énergie émetteur (EAS) dans des messages du réseau public (400) selon le protocole internet.

9. Procédé selon l'une des revendications précédentes, dans lequel le composant de transmission d'énergie émetteur (EAS) émet n fois le message à émettre, n correspondant au nombre de composants d'automatisation d'énergie récepteurs (EAE1 ; EAE2 ; EAE3) qui sont associés à la première application émettrice (EAS) dans l'information.

10. Procédé selon l'une des revendications précédentes, dans lequel le composant d'automatisation d'énergie émetteur (EAS) émet une fois le message à émettre, un premier composant d'automatisation d'énergie récepteur (EAE2) retransmettant celui-ci à un autre, deuxième composant d'automatisation d'énergie récepteur (EAE3).

11. Procédé selon l'une des revendications précédentes, dans lequel chaque composant d'automatisation d'énergie (EAE1 ; EAE2 ; EAE3) recevant un message retransmet le message reçu en tant que multicast dans le réseau de communication du poste de transformation (100, 200, 300), dans lequel il se trouve.

12. Composant d'automatisation d'énergie (110, 120, 130 ; 210 ; 310, 320) pour un poste de transformation (100, 200, 300), comprenant :
- au moins une application (112, 122, 123, 132 ; 212, 213 ; 312, 313, 322, 323) pour sa commande, chaque application (112, 122, 123, 132 ; 212, 213 ; 312, 313, 322, 323) étant configurée pour traiter des messages selon la norme IEC 61850 ;
- un moyen de communication (111, 121, 131 ; 211 ; 311, 321) qui est conçu pour traiter des messages selon la norme IEC 61850 et qui peut encapsuler ceux-ci dans des messages d'un réseau public (400) qui est basé sur le protocole internet ;
**caractérisé en ce que** :
- chaque application (112, 122, 123, 132 ; 212, 213 ; 312, 313, 322, 323) fait partie d'un groupe (10, 20, 30) d'applications (112, 122, 123, 132 ; 212, 213 ; 312, 313, 322, 323) qui sont agencées dans des composants d'automatisation d'énergie correspondants (110, 120, 130 ; 210 ; 310, 320) d'au moins deux postes de transformation (100, 200, 300) ;
- celle-ci comprend une information ou peut y accéder, laquelle comprend une information d'adresse respective de composants d'automatisation d'énergie récepteurs (EAE1 ; EAE2 ; EAE3) pour le même groupe (10, 20, 30), dont fait partie l'application concernée (AE1, AE2, AE3) du composant d'automatisation d'énergie ;
- le moyen de communication (111, 121, 131 ; 211 ; 311, 321) d'un composant d'automatisation d'énergie émetteur (EAS) est conçu pour établir un tunnel vers les composants d'automatisation d'énergie récepteurs (EAE1 ; EAE2 ; EAE3) pour lesquels est stockée une information d'adresse.

13. Poste de transformation (100, 200, 300) pour un réseau d'automatisation d'énergie (1), comprenant au moins un composant d'automatisation d'énergie (110, 120, 130 ; 210 ; 310, 320) selon la revendication 12.
